(19) **Europäisches Patentamt European Patent Office Office européen des brevets**

(11) **EP 2 324 442 B1**

(12) **FASCICULE DE BREVET EUROPEEN**

(45) Date de publication et mention de la délivrance du brevet:
**08.02.2012 Bulletin 2012/06**

(21) Numéro de dépôt: **09806408.2**

(22) Date de dépôt: **30.07.2009**

(51) Int Cl.:
*G06F 21/02* (2006.01)     *G06F 21/00* (2006.01)

(86) Numéro de dépôt international:
**PCT/EP2009/059886**

(87) Numéro de publication internationale:
**WO 2010/018071 (18.02.2010 Gazette 2010/07)**

(54) **PROCEDE DE DETECTION D'ANOMALIES DANS UN CIRCUIT DE CRYPTOGRAPHIE PROTEGE PAR LOGIQUE DIFFERENTIELLE ET CIRCUIT METTANT EN OEUVRE UN TEL PROCEDE**

VERFAHREN FÜR DEN NACHWEIS VON ANOMALIEN IN EINER DURCH DIFFERENZIELLE LOGIK GESCHÜTZTEN KRYPTOGRAFISCHEN SCHALTUNG UND SCHALTUNG ZUR UMSETZUNG DIESES VERFAHRENS

METHOD FOR DETECTING ABNORMALITIES IN A CRYPTOGRAPHIC CIRCUIT PROTECTED BY DIFFERENTIAL LOGIC, AND CIRCUIT FOR IMPLEMENTING SAID METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.08.2008 FR 0855537**

(43) Date de publication de la demande:
**25.05.2011 Bulletin 2011/21**

(73) Titulaire: **Institut Telecom - Telecom Paristech 75013 Paris (FR)**

(72) Inventeurs:
• **DANGER, Jean-Luc**
  **F-62160 Antony (FR)**
• **GUILLEY, Sylvain**
  **F-75013 Paris (FR)**
• **FLAMENT, Florent**
  **F-75015 Paris (FR)**

(74) Mandataire: **Brunelli, Gérald et al Marks & Clerk France Immeuble Visium 22, avenue Aristide Briand 94117 Arcueil Cedex (FR)**

(56) Documents cités:
**WO-A-01/55821          WO-A-2005/085972 US-A1- 2007 171 099**

EP 2 324 442 B1

**Description**

L'invention concerne un procédé et un circuit de détection d'anomalies dans un circuit de cryptographie protégé par logique différentielle.

Elle s'applique notamment au domaine de la protection des circuits de cryptographie contre les attaques par injection de faute.

La cryptographie a notamment pour but de protéger :

- soit le secret de l'information par le moyen du chiffrement et de son opération duale : le déchiffrement ;
- soit seulement son intégrité, par les opérations de signature et de vérification de signature.

La cryptographie utilise des méthodes mathématiques sures, en ce sens qu'il n'existe pas dans l'état actuel des connaissances publiées des méthodes d'attaque plus rapide que l'attaque exhaustive correspondant à l'essai de toutes les clés possibles.

En général, les méthodes de chiffrement impliquent des calculs complexes nécessaires à la sécurité des systèmes. Cette complexité ne pose pas de problèmes particuliers aux ordinateurs mais elle constitue un inconvénient dans le cas de dispositifs grand public ne comportant pas une grande puissance de calcul, en général contrôlés par des microprocesseurs à faible coût. Les conséquences peuvent être alors de plusieurs ordres, ainsi par exemple une carte bancaire mettrait plusieurs minutes à signer une transaction ou un décodeur numérique de télévision payante ne pourrait pas suivre le débit d'informations en jeu.

Pour pallier ce type de problème sans augmenter le prix des systèmes, il est habituel d'adjoindre une aide à l'unité centrale contrôlant le dispositif, en général sous la forme d'un coprocesseur dédié à la cryptographie.

Cependant, qu'il soit mis en oeuvre par l'unité centrale ou par un coprocesseur spécialisé, l'algorithme de cryptographie est dans tous les cas mis en oeuvre par un dispositif physique, électronique. Les dispositifs électroniques présentent des imperfections inévitables liées aux propriétés inhérentes des lois de l'électricité.

C'est ainsi que des systèmes cryptographiques sûrs du point de vue mathématique peuvent être attaqués en exploitant les imperfections des systèmes physiques mettant l'algorithme en oeuvre. La durée des calculs peut dépendre des valeurs des données, en particulier sur des systèmes logiciels optimisés en temps, ce qui peut donner lieu aux attaques de type « timing attack » permettant dans certains cas de retrouver la totalité des clés secrètes à partir de simples mesures de temps d'exécution. La consommation électrique instantanée peut également dépendre des données, ce qui peut donner lieu à des séries d'attaques telles que :

- la SPA (Simple Power Analysis) qui tente de différencier les opérations exécutées par une unité centrale à partir d'une mesure de sa consommation électrique mesurée pendant une opération cryptographique ;
- l'analyse différentielle de consommation DPA (Differential Power Analysis) qui utilise des opérations statistiques sur de nombreuses mesures de consommation électrique, effectuées lors d'opérations de cryptographie sur des messages aléatoires et avec une clé constante pour valider ou invalider une hypothèse faite sur une partie limitée de la clé ;
- les attaques de type « template » qui dans une première phase utilisent un dispositif identique au dispositif attaqué, à ceci près que ce dispositif identique ne contient aucun secret, pour construire des modèles de consommation indexés par la valeur d'une partie limitée de la clé et dans une deuxième phase utilisent quelques mesures de consommation du dispositif attaqué pour déterminer le modèle dont les consommations mesurées sont les plus proches et ainsi déterminer la valeur de cette sous-clé ;

Par ailleurs, tout courant électrique circulant dans un conducteur engendre un champ électromagnétique dont la mesure peut donner lieu à des attaques identiques dans leur principe aux attaques portant sur la consommation électrique, notamment par DPA.

Enfin, des attaques dites actives, ou par injection de fautes, perturbent le fonctionnement des systèmes afin d'exploiter les résultats faux pour retrouver les secrets du système.

On appelle « canal caché » toute imperfection d'un dispositif physique mettant en oeuvre un algorithme de cryptographie et susceptible de laisser fuir de l'information liée aux secrets conservés dans la mémoire du dispositif.

Les attaques en fautes sont des attaques actives pouvant être de natures très différentes, comme expliqué notamment dans l'article de David Naccache « Finding faults », IEEE Security and Privacy, 3(5), pages 61-65, 2005 : variation de température ou tension, signal parasite fort sur l'alimentation ou par champ électromagnétique, tirs laser, etc. Les fautes générées ont pour conséquence de modifier la valeur d'un noeud du circuit attaqué. Elles peuvent être simples ou multiples, permanentes ou transitoires en fonction de l'impact sur le silicium. La souplesse des injections de fautes transitoires donne lieu à des attaques plus puissantes en faisant des essais multiples et augmente ainsi les chances de succès. Les attaques avec des fautes simples simplifient la procédure d'attaque. Les attaques en fautes sont basées sur l'analyse différentielle entre la sortie chiffrée non erronée et la sortie avec faute. Par exemple, l'attaque présenté dans l'article de Gilles Piret et Jean-Jacques Quisquater « A Differential Fault Attack Technique against SPN Structures, with Application to the AES and KHAZAD », dans CHES, volume 2779 de LNCS, pages 77-88, Springer, 2003 sur le chiffrement AES s'avère être extrêmement efficace si la faute arrive au pénultième ou à l'antépénultième tour.

Les attaques par injection de fautes ont, jusqu'à présent, et ce très paradoxalement, été considérées comme coûteuses, et donc accessibles en pratique uniquement par des organisations douteuses soutenues financièrement. Il est maintenant possible de commander sur internet une station de décapsulation et un banc laser accordable clé en main. Il en résulte que la vraisemblance d'une attaque par injection de fautes est considérablement accrue. Ainsi, un cryptoprocesseur implanté dans un circuit intégré, par exemple un FPGA, ne peut désormais être considéré sûr que s'il implémente simultanément des contremesures aux attaques en observation, notamment de types DPA ou EMA, et en injection de faute. De plus, des attaques combinant observation et fautes ont été proposées comme celle décrite par Bruno Robisson et Pascal Manet dans leur article « Differential Behavioral Analysis », dans CHES, volume 4727 de LNCS, pages 413-426, Springer, 2007.

Une contremesure efficace pour lutter contre ce type d'attaque repose sur l'emploi de la redondance. Par exemple un bloc de calcul peut être reproduit trois fois et une fonction majorité permet ensuite d'éliminer le bloc où une faute est injectée. Un des inconvénients de cette solution est qu'elle implique un surcoût du à la reproduction du ou des blocs de calcul ou bien à l'insertion d'un module de contrôle de cohérence basée sur une vérification d'invariants.

Une autre contremesure consiste à détecter l'injection de fautes. Dans ce cas l'utilisateur est alerté et peut agir pour se protéger, en réinitialisant le système par exemple.

Un but de l'invention est notamment de palier les inconvénients précités.

A cet effet l'invention a pour objet un procédé de détection d'anomalies dans un circuit protégé par logique différentielle et traitant des variables logiques représentées par un couple de composantes, un premier réseau de cellules réalisant des fonctions logiques sur la première composante desdits couples, un deuxième réseau de cellules duales fonctionnant en logique complémentaire sur la deuxième composante, les fonctions logiques étant réalisées par chaque couple de cellules en une phase de précharge mettant les variables dans un état connu à l'entrée des cellules suivie d'une phase d'évaluation où un calcul est effectué par les cellules. Une anomalie est détectée par au moins un état non cohérent survenant pendant la phase de précharge ou pendant la phase d'évaluation..

Le circuit protégé par logique différentielle est par exemple un circuit de cryptographie.

Selon un aspect de l'invention, une porte logique est utilisée pour la détection d'états non cohérents survenant pendant la phase de précharge, cette porte logique étant une porte « OU » si l'état cohérent est (0,0) ou une porte « ET » si l'état cohérent est (1,1).

La porte logique utilisée pour la détection d'états non cohérents survenant pendant la phase d'évaluation peut être une porte « XNOR ».

Un multiplexeur permet par exemple de sélectionner le signal résultant de la détection d'états non cohérents, la sortie de la porte de détection d'états non-cohérents en phase de précharge étant sélectionnée durant la phase de précharge et la sortie de la porte de détection d'états non-cohérents en phase d'évaluation durant la phase d'évaluation, la sélection étant contrôlée par un signal de configuration.

L'invention a également pour objet un circuit protégé par logique différentielle traitant des variables logiques représentées par un couple de composantes, un premier réseau de cellules réalisant des fonctions logiques sur la première composante desdits couples, un deuxième réseau de cellules duales fonctionnant en logique complémentaire sur la deuxième composante, les fonctions logiques étant réalisées par chaque couple de cellules en une phase de précharge mettant les variables dans un état connu à l'entrée des cellules suivie d'une phase d'évaluation où un calcul est effectué par les cellules, ledit circuit étant caractérisé en ce qu'il comporte au moins un module de détection mettant en oeuvre le procédé selon l'une des revendications précédentes et comportant des moyens pour tester la cohérence entre les deux composantes des variables logiques durant les phases de précharge ou d'évaluation aux noeuds surveillés du circuit.

Le circuit est un par exemple un circuit programmable de type FPGA ou bien un circuit de type ASIC.

Au moins un des modules de détection comporte, par exemple, des moyens de détecter les états non cohérents pendant la phase de précharge en sortie des cellules à surveiller.

Au moins un des modules de détection comporte, par exemple, des moyens de détecter les états non cohérents pendant la phase d'évaluation en sortie des cellules à surveiller.

Les sorties des modules de détection peuvent être collectées par chaînage, les résultats étant centralisés sur au moins une équipotentielle par l'intermédiaire de portes « OU ».

La sortie de chaque chaîne de détection peut être connectée à une bascule déclenchée par le signal d'horloge et générant une sortie globale prenant la valeur 1 lorsqu'au moins un état non cohérent est détecté par un des modules de détection de la chaîne.

A titre d'exemple, au moins une partie des modules de détection du circuit peuvent être organisés en arbre, le dernier module de détection générant un signal global indiquant si au moins un état non cohérent a été détecté à un des noeuds du circuit surveillés par lesdits modules.

Les couples de composantes à surveiller peuvent, par exemple, être regroupés par vecteurs, les modules de détection étant composés de deux multiplicateurs-accumulateurs réalisant des opérations de multiplication-accumulation entre les vecteurs après qu'un bit de poids faible de valeur 1 ait été adjoint à chacun desdits vecteurs, la différence entre les résultats des deux opérations étant calculée puis traitée par un comparateur à zéro dont la sortie prend la valeur zéro lorsque qu'un état non cohérent est détecté dans les phases de précharge ou d'évaluation.

La sortie du comparateur à zéro des modules de détection est par exemple connectée à une bascule de manière à générer une sortie stable, résultat de la détection d'états non cohérents.

L'invention a notamment l'avantage de s'appuyer sur les caractéristiques des circuit protégés grâce à une contremesure par logique différentielle, initialement prévu pour combattre les attaques par observation des canaux cachés afin de détecter d'autres types d'attaques ou de perturbations.

D'autres caractéristiques et avantages de l'invention apparaîtront à l'aide de la description qui suit, donnée à titre illustratif et non limitatif, faite en regard des dessins annexés parmi lesquels :

- la figure 1 représente une porte « ET » en logique différentielle ;
- la figure 2 illustre les phases d'une étape de calcul en logique différentielle ;
- la figure 3 illustre le principe de fonctionnement de la détection d'anomalies s'appuyant sur une architecture protégée par logique différentielle ;
- la figure 4 présente un exemple de circuit utilisant le procédé de détection d'anomalies ;
- la figure 5 présente un premier exemple de chaîne de détection d'anomalies ;
- la figure 6 présente un second exemple de chaîne de détection d'anomalies ;
- la figure 7 présente un exemple de structure en arbre pour la détection d'anomalies ;
- la figure 8 présente un exemple d'utilisation du procédé dans un circuit utilisant des blocs de multiplication accumulation ;

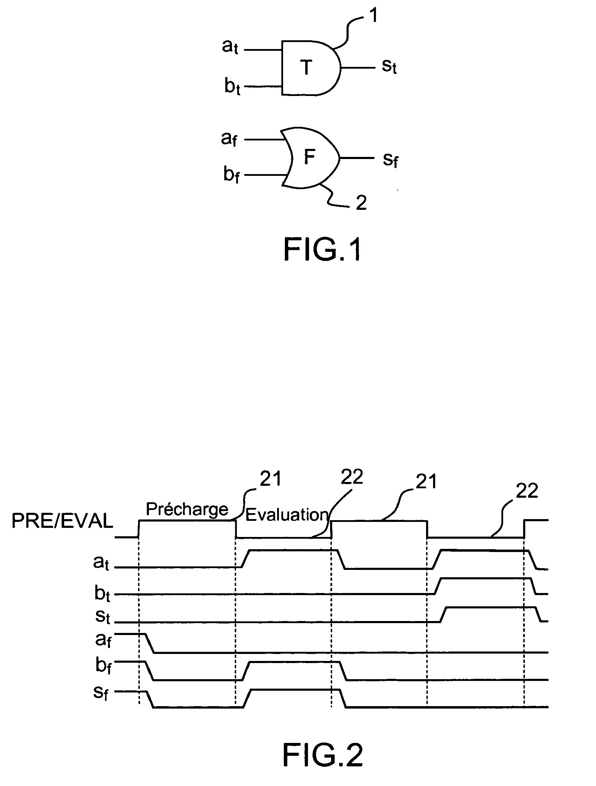

Le figure 1 présente une porte « ET » 1, 2 en logique WDDL (Wave Dynamic Differential Logic) comme exemple d'illustration du principe de la logique différentielle. Celle-ci est composée de deux réseaux logiques duaux 1, 2, fonctionnant en logiques complémentaires. L'exemple de la logique WDDL est utilisé dans la suite de la description, mais le principe de l'invention s'applique aux autres types de logique différentielle, comme par exemple la logique MDPL (Masked Dual-rail Pre-charge Logic). Outre la dualité des réseaux de calcul, un calcul en logique différentielle s'effectue suivant deux phases distinctes : une phase de précharge et une phase d'évaluation.

Les données sont représentées en double rail, chaque variable logique a étant formée d'un couple de signaux $(a_t, a_f)$ codés de la façon suivante :

- $(0, 0)$ pour l'état de repos durant la phase de précharge : la valeur de a n'est pas définie, elle est noté $\Omega$ ;
- $(1, 0)$ est un état actif durant la phase d'évaluation où a = 1 ;
- $(0, 1)$ est l'autre état actif durant la phase d'évaluation où a = 0.

Une porte logique H a deux entrées a et b et une sortie s est physiquement représentée par deux portes 1, 2 ayant respectivement les fonctions logiques $T(a_t, b_t)$ et $F(a_f, b_f)$ telles que :

$$s_t = T(a_t, b_t) \qquad\qquad (1)$$

$$s_f = F(a_f, b_f) \qquad\qquad (2)$$

Le réseau logique « vrai » correspond à la fonction T qui délivre le signal $s_t$. Le réseau logique dual « faux » correspond à la fonction F qui délivre le signal dual $s_f$. La figure 1 illustre la porte « ET » où le réseau « vrai » réalisant la fonction T reçoit les deux entrées non complémentées $a_t$ et $b_t$. La fonction duale « OU » réalise la fonction F. Pour un vecteur de variables x les relations suivantes sont vérifiées :

$$T(x) = H(x) \qquad\qquad (3)$$

$$F(\overline{x}) = \overline{H(x)} \qquad\qquad (4)$$

La figure 2 présente les phases d'une étape de calcul en logique différentielle, par exemple du type WDDL. Cette étape comporte des phases successives de précharge 21 et d'évaluation 22. Des exemples d'états des variables d'entrées $a_t$ ,$b_t$ ,$a_f$ ,$b_f$ et des variables de sorties correspondantes $s_t$ , $s_f$ sont présentés en regard des phases de précharge et d'évaluation. Les chronogrammes de la figure 2 montrent que le nombre de transitions est le même, trois en l'occurrence, lors du passage de la phase de précharge à la phase d'évaluation et vice-versa. Comme la consommation est directement liée au nombre de transitions dans les technologies électroniques de type CMOS notamment, la consommation est ainsi équilibrée.

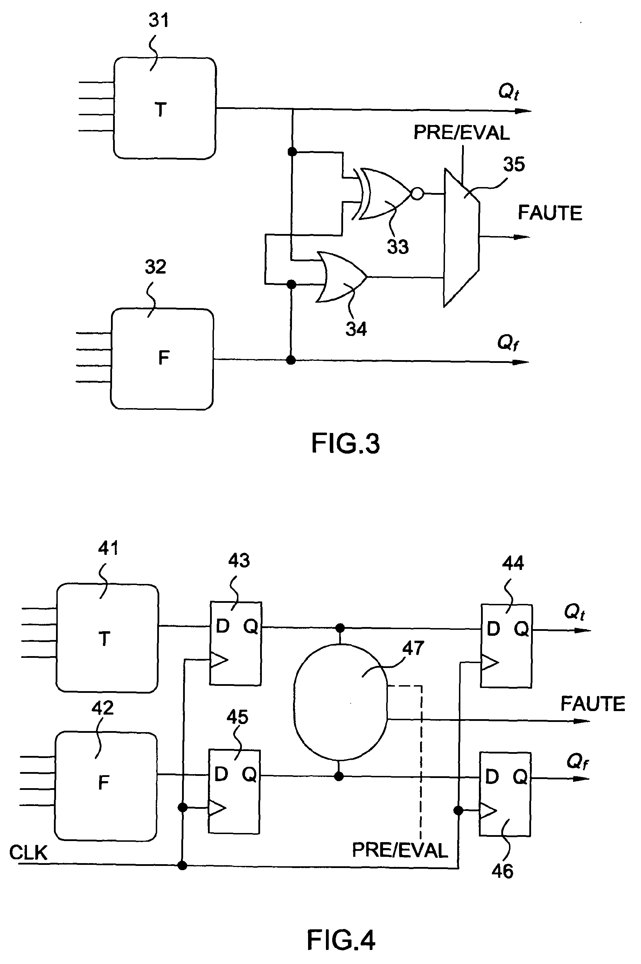

La figure 3 illustre le principe de fonctionnement de la détection d'anomalies s'appuyant sur une architecture protégée par logique différentielle.

La logique différentielle qualifiée de double rail est redondante par nature. En effet, une variable à l'état logique implique un signal "Vrai" dont la valeur est complémentaire du signal "Faux" durant l'évaluation et identique durant la précharge. En conséquence une anomalie peut être détectée lorsque que surviennent des états non cohérents, c'est-à-dire des états qui ne sont pas censés exister. Par exemple en logique WDDL, une anomalie est détectée si un état non cohérent est détecté, c'est-à-dire :

- durant la phase de précharge le couple de signaux duaux est différent de l'état $(Q_t, Q_f) = (0, 0)$ ;
- durant la phase d'évaluation le couple de signaux est différent des états $(Q_t, Q_f) = (0, 1)$ ou $(Q_t, Q_f) = (1, 0)$.

Par ailleurs, une faute unique en logique différentielle a une probabilité de 1/2 d'avoir un impact car le passage de la logique double rail à simple rail se fait en ne considérant qu'un seul signal sur les deux composantes d'une variable.

En cas de fautes multiples, le mécanisme de détection proposé peut ne pas détecter des changements d'état conjugués, comme par exemple (0, 1) qui peut être transformé en (1, 0) durant la phase d'évaluation. Ce cas de figure est cependant très peu probable car :

- l'état de précharge a une chance importante d'être affecté,
- en cas de fautes multiples, d'autres variables peuvent être touchées et détectées,
- la plupart des attaques ne permettent pas de faire une inversion de bit concomitamment sur les deux signaux. Par exemple, les attaques par violation de temps de positionnement préalable en utilisant la température, la tension ou la fréquence.

L'exemple de la figure 3 illustre le principe d'une porte différentielle WDDL ayant un mécanisme de détection d'anomalies.

Afin de réaliser cette fonction de détection, une porte « OU » 34 réalisant l'opération d'addition logique permet de détecter les états no cohérents en sortie des réseaux T 31 et F 32 lors de la phase de précharge. Ainsi, lorsque les états (0,1), (1,0) ou (1,1) apparaissent, la sortie de la porte « OU » 34 vaut 1.

De la même manière, une porte « XNOR » 33 réalisant l'opération de ou exclusif inverse permet de détecter les états non cohérents en sortie des réseaux T 31 et F 32 lors de la phase de d'évaluation. Ainsi, lorsque les états (0,0) ou (1,1) apparaissent, la sortie de la porte « XNOR » 33 vaut 1.

Un multiplexeur 35 permet ensuite de sélectionner la sortie de la porte « OR » 34 ou de la porte « XNOR » 33. Ledit multiplexeur est configuré avec un signal d'entrée PRE/EVAL. Par exemple, la convention suivante peut être utilisée :

- lors de la phase de précharge, PRE/EVAL prend la valeur 0 et la sortie de la porte « OU » 34 est transmise en sortie du multiplexeur 35 ;
- lors de la phase d'évaluation, PRE/EVAL prend la valeur 1 et la sortie de la bascule « XNOR » 33 est transmise en sortie du multiplexeur 35 ;

Par conséquent, le signal FAUTE disponible en sortie du multiplexeur 35 prend la valeur 1 lorsqu'un état non cohérent est détecté et reste à 0 sinon.

De manière à simplifier l'implémentation du procédé, la détection peut ne s'opérer que pendant la phase d'évaluation, permettant ainsi de réduire la complexité en ne nécessitant qu'une porte « XNOR ». La détection peut également ne s'opérer que pendant la phase de précharge, permettant ainsi de réduire la complexité en ne nécessitant qu'une porte « OU ». Dans les deux cas, l'utilisation du multiplexeur 35 n'est pas requise. L'inconvénient de cette réduction de complexité est que les chances de détecter une intrusion sont réduites.

La figure 4 présente un exemple d'utilisation du procédé de détection de fautes. La détection de faute peut être mise en oeuvre au sein de modules de détection placés par exemple en sortie de chaque porte duale composée d'un réseau T 41 et d'un réseau F 42 d'un circuit de cryptographie. Le circuit de cryptographie comportant lesdits modules est implémenté, par exemple, dans un circuit ASIC ou bien dans un circuit programmable de type FPGA.

Plutôt que de placer les modules de détections en sortie de chaque porte duale, il est également possible, et ce afin de réduire la complexité du circuit, de mettre en oeuvre lesdits modules uniquement aux noeuds importants du circuit. Un noeud dit « important » du circuit est un noeud se situant en sortie de registres, de type bascules D 43, 45 par exemple, de manière à s'assurer de la stabilité des signaux surveillés par le module de détection. Ainsi, sur l'exemple de la figure 4, la détection s'effectue en sortie d'un réseau de cellules T 41 et d'un réseau de cellules F 42. Le module de détection 47 est positionné entre deux paires de registres 43, 45 et 44, 46 composées de bascules D. Chaque phase de calcul correspond alors à une période d'horloge. Un circuit de chiffrement utilisant la logique différentielle comporte un grand nombre de noeuds. Le signal PRE/EVAL permet de configurer chaque module du circuit pour la détection de faute pendant la phase de précharge ou la phase d'évaluation. Un signal FAUTE en sortie de chaque module 47 permet de savoir si une anomalie, c'est-à-dire un état non cohérent, a été détectée au niveau de chaque noeud surveillé.

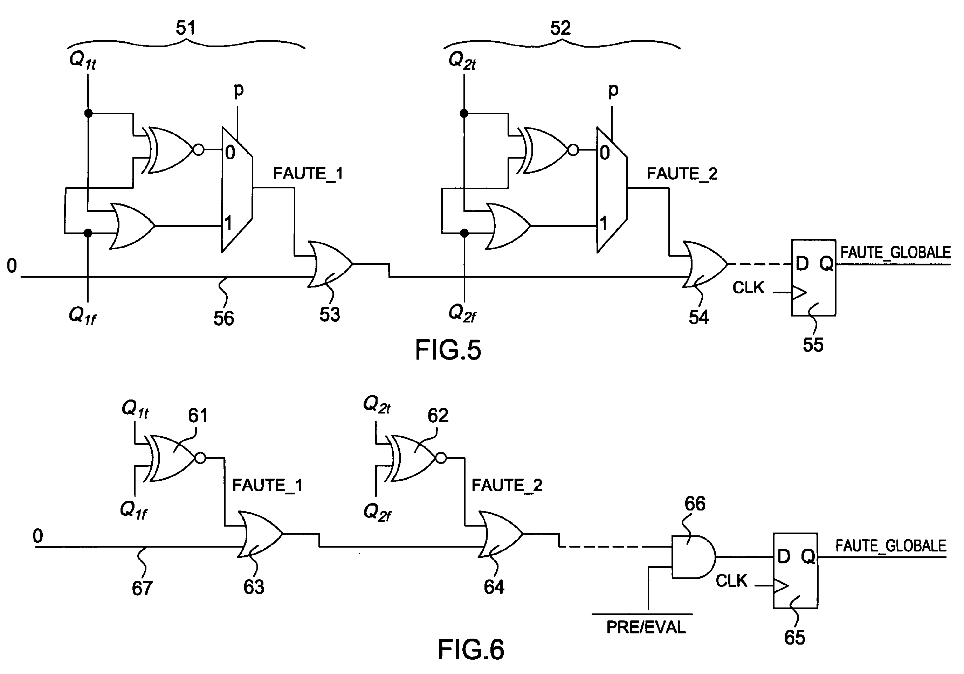

La figure 5 présente un exemple de chaîne de détection d'anomalies. Comme décrit précédemment, des modules de détections peuvent être placés dans un circuit de chiffrement utilisant une architecture à logique différentielle, et ce au niveau de chacun des noeuds à surveiller. Une manière de collecter les anomalies est de chaîner les détecteurs. Cette technique présente l'intérêt de n'avoir qu'une équipotentielle 56 entre les portes où se font la détection et facilite ainsi le routage dans les ASICs ou FPGA. Ainsi les signaux FAUTE des modules de détection 51, 52 sont chainés les uns aux autres en utilisant des portes « OU » 53, 54.

Les signaux de sortie des modules de détection sont chaînés jusqu'à une bascule 55 collectant l'état global du système de manière à fiabiliser le signal global de sortie FAUTE_GLOBALE. Ledit signal prend la valeur 1 si au moins une faute a été détectée par un des modules de détection présent sur la chaîne.

S'il s'avère que la chaîne présente un chemin critique limitant la vitesse globale de fonctionnement du processeur protégé, un registre de pipeline peut être inséré. Il faut néanmoins s'assurer que la latence de la détection ne permette pas à l'attaquant de récupérer le résultat du calcul avant la détection d'anomalie.

La figure 6 présente un second exemple de chaîne de détection de fautes. Pour réduire la complexité, une seule chaîne peut être utilisée. Par exemple, les modules de détection peuvent être simplifiés par rapport à ceux de la figure 5 et se réduire à une porte « XNOR » 61, 62. Dans ce cas, la détection d'états non cohérents n'est valable que pendant la phase d'évaluation. De façon à ignorer le résultat des modules de détection pendant la phase de précharge, une porte « ET » 66 permet de ne tenir compte du résultat de la détection de faute de chacun des modules de détection de la chaine que lorsque le signal PRE/EVAL est à 1. Les signaux FAUTE des modules de détection 61, 62 sont chainés les uns aux autres en utilisant des portes « OU » 63, 64. Les anomalies détectées par les modules de détection chaînées sont transmises sur une équipotentielle 67 jusqu'à une bascule 65 collectant l'état global du système de manière à fiabiliser le signal global de sortie FAUTE_GLOBALE. Ledit signal prend la valeur 1 si au moins une faute a été détectée à un des noeuds de la chaîne.

Selon le même principe, les modules de détection peuvent être simplifiés de manière à détecter les états non cohérents uniquement durant la phase d'évaluation. Dans ce cas, des portes « OU » sont utilisées à la place des portes « XNOR » 61, 62 de la figure 6 et le signal PRE/EVAL utilisé en entrée de la porte « ET » 66 est remplacé par le signal PRE/EVAL de manière à ne tenir compte du résultat de la détection global que pendant la phase d'évaluation, soit lorsque le signal PRE/EVAL prend la valeur 1.

Il est également possible d'utiliser deux chaînes indépendantes, une pour la détection des états non cohérents en phase de précharge et l'autre pour la détection des états non cohérents en phase d'évaluation, ceci permettant de s'affranchir de l'utilisation de multiplexeurs.

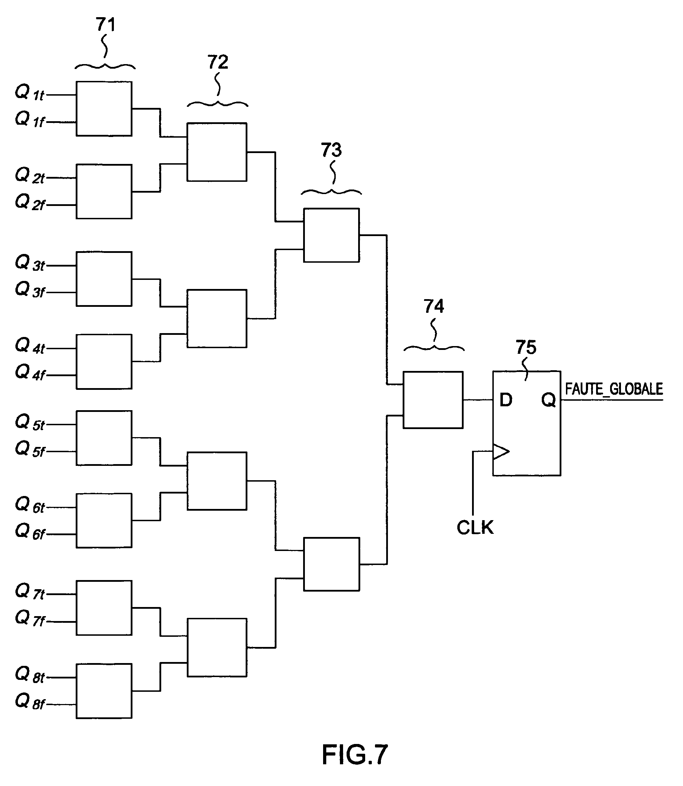

La figure 7 présente un exemple de structure en arbre pour la détection de fautes. En effet, afin d'accélérer le chemin de détection, les modules de détection peuvent être structurés en arbre. L'exemple de la figure 7 donne un exemple où la détection d'états non cohérents est effectuée sur huit noeuds d'un circuit protégé par logique différentielle. Les états des couples $(Q_{1t}, Q_{1f})$, $(Q_{2t}, Q_{2f})$, ...,$(Q_{8t}, Q_{8f})$ sont surveillés grâce à des modules de détection 71 tels que ceux décrits à l'aide des figures 3 et 4 et sont positionnés au niveau de chacun desdits noeuds. Le résultat de la détection par chacun des modules est ensuite transmis à un second banc de modules de détection 72 dont les sorties sont elles même transmises à un troisième banc de modules de détection 73. Finalement, un dernier détecteur 74 génère un signal résultat de la détection globale des états non cohérents sur les huit noeuds surveillés. Une bascule 75 collecte l'état global du système de manière à fiabiliser le signal de sortie FAUTE_GLOBALE.

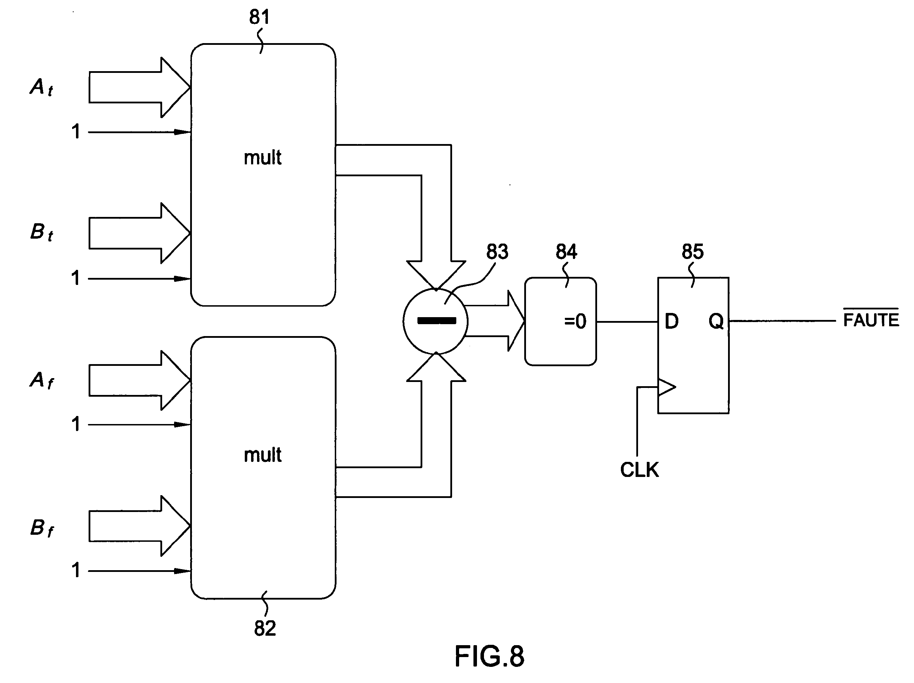

La figure 8 présente un exemple d'utilisation du procédé dans un circuit utilisant des blocs de multiplication accumulation. En effet, la détection peut être simplifiée en utilisant des blocs de multiplication-accumulation, généralement appelés blocs MAC, acronyme de la terminologie anglo-saxonne « multiplication and accumulation ». Ces blocs sont par exemple disponibles dans certains circuits FPGA. Les signaux d'entrées sont dans ce cas composés par deux couples de mots de N bits $A = (A_t, A_f)$ et $B = (B_t, B_f)$. $A_f$ et $B_f$ sont les duaux de $A_t$ et $B_t$ et s'expriment donc de la manière suivante selon la représentation des entiers signés en complément à deux :

$$A_f = -A_t - 1 \qquad\qquad (5)$$

$$B_f = -B_t - 1 \qquad\qquad (6)$$

Le produit $A_t \times B_t$, est calculé dans l'ensemble des entiers relatifs et doit correspondre au produit $(A_f + 1) \times (B_f + 1)$. Une faute unique peut ainsi être détectée s'il n'y a pas correspondance entre les deux produits.

Dans le cas de fautes multiples il peut exister des cas où les fautes sur A et B se compensent et donnent les mêmes produits mais ces cas ont de très faibles probabilités d'occurrence. Néanmoins, ce calcul de multiplication entière basé sur un invariant algébrique assure une couverture importante, et constitue donc une contre-mesure efficace contre l'injection de fautes.

Pour utiliser ce principe, il faut non seulement considérer $A_f + 1$ et $B_f + 1$ et non $A_f$ et $B_f$, mais il faut en plus que ces variables ne soient jamais nulles de façon à opérer la détection durant les deux phases de précharge et d'évaluation. Une manière simple de satisfaire à ces conditions est d'adjoindre un bit de poids faible de valeur 1 aux quatre mots $A_t$, $B_t$, $A_f$ et $B_f$.

Deux blocs MAC 81, 82 sont utilisés. Le premier 81 prend en entrée un mot binaire de N bits $A_t$ auquel est adjoint un bit de poids faible valant 1 et un mot binaire de N bits $B_t$ auquel est également adjoint un bit de poids faible valant 1. Le deuxième bloc MAC 82 prend en entrée un mot binaire de N bits $A_f$ auquel est adjoint un bit de poids faible valant 1 et un mot binaire de n bits $B_f$ auquel est également adjoint un bit de poids faible valant 1. Les résultats en sortie de chacun des blocs 81, 82 sont comparés en faisant la différence entre lesdits résultats 83. Cette différence est nulle lorsqu'aucune anomalie n'est détectée. Un comparateur à zéro 84 est par conséquent ajouté afin de détecter s'il y a faute au non. Le résultat du comparateur 84 est ensuite transmis en entrée d'une bascule 85 afin de fiabiliser le signal de sortie. Le signal $\overline{\text{FAUTE}}$ en sortie de la bascule reste à 1 lorsqu'aucune anomalie n'est détectée et prend la valeur 0 dans le cas contraire.

## Revendications

1. Circuit protégé par logique différentielle traitant des variables logiques représentées par des couples de composantes $(a_t, a_f)$ $(b_t, b_f)$, un premier réseau de cellules (T) réalisant des fonctions logiques sur la première composante desdits couples, un deuxième réseau de cellules duales (F) fonctionnant en logique complémentaire sur la deuxième composante, **caractérisé en ce que** les composantes des couples sont regroupées par vecteurs $(A_t, A_f, B_t, B_f)$, ledit circuit comprenant des modules de détection composés de deux multiplicateurs-accumulateurs (81, 82) réalisant des opérations de multiplication-accumulation entre les vecteurs $(A_t, B_t)$ regroupant les premières composantes des couples d'une part et les vecteurs $(A_f, B_f)$ regroupant les secondes composantes des couples d'autre part, ceci après qu'un bit de poids faible de valeur 1 ait été adjoint à chacun desdits vecteurs, la différence entre les résultats des deux opérations étant calculée (83) puis traitée par un comparateur à zéro (84) dont la sortie prend la valeur zéro lorsque qu'un état non cohérent est détecté dans les phases de précharge ou d'évaluation.

2. Circuit selon la revendication 1 **caractérisé en ce que** la sortie du comparateur à zéro (84) des modules de détection est connectée à une bascule (85) de manière à générer une sortie stable (FAUTE), résultat de la détection d'états non cohérents.

3. Circuit protégé par logique différentielle de préférence défini par l'une quelconque des revendications 1 ou 2 traitant des variables logiques représentées par des couples de composantes $(a_t, a_f)$ $(b_t, b_f)$, un premier réseau de cellules (T) réalisant des fonctions logiques sur la première composante desdits couples, un deuxième réseau de cellules duales (F) fonctionnant en logique complémentaire sur la deuxième composante, les fonctions logiques étant réalisées par chaque couple de cellules en une phase de précharge mettant les variables dans un état connu à l'entrée des cellules suivie d'une phase d'évaluation où un calcul est effectué par les cellules, ledit circuit comportant une pluralité de modules de détection (47) d'anomalies placés en différents noeuds du circuit, une anomalie correspondant à un état non cohérent survenant pendant la phase de précharge ou pendant la phase d'évaluation, un module de détection produisant un signal de sortie (FAUTE) indiquant qu'une anomalie est détectée au niveau du noeud auquel il est associé, **caractérisé en ce que** le circuit comporte des moyens pour combiner lesdits signaux de sorties pour générer un signal global de sortie (FAUTE_GLOBALE) dont l'état indique qu'une faute est détectée par au moins un module de détection.

**4.** Circuit selon la revendication 3 **caractérisé en ce que** les sorties des modules de détection (FAUTE) sont collectées par chaînage, les résultats étant centralisés sur au moins une équipotentielle (56, 67) par l'intermédiaire de portes « OU » (53, 54, 63, 64).

**5.** Circuit selon la revendication 4 **caractérisé en ce que** la sortie de chaque chaîne de détection est connectée à une bascule déclenchée par le signal d'horloge du circuit (CLK) et générant le signal global de sortie (FAUTE_ GLOBALE) prenant la valeur 1 lorsqu'au moins un état non cohérent est détecté par un des modules de détection (51, 52, 61, 62) de la chaîne.

**6.** Circuit selon la revendication 3 **caractérisé en ce qu'**au moins une partie des modules de détection du circuit sont organisés en arbre (71, 72, 73, 74), le dernier module de détection (74) générant un signal global indiquant si au moins un état non cohérent a été détecté à un des noeuds du circuit surveillés par lesdits modules.

**7.** Circuit selon l'une quelconque des revendications 3 à 6 **caractérisé en ce qu'**un module de détection comprend une porte logique utilisée pour la détection d'états non cohérents survenant pendant la phase de précharge, cette porte logique étant une porte « OU » si l'état cohérent est (0,0) ou une porte « ET » si l'état cohérent est (1,1).

**8.** Circuit selon l'une quelconque des revendications 3 à 7 **caractérisé en ce qu'**un module de détection comprend une porte logique « XNOR » pour la détection d'états non cohérents survenant pendant la phase d'évaluation.

**9.** Circuit selon l'une quelconque des revendications 3 à 8 **caractérisé en ce qu'**un module de détection comprend un multiplexeur (35) permettant de sélectionner le signal (FAUTE) résultant de la détection d'états non cohérents, la sortie de la porte de détection d'états non-cohérents en phase de précharge (34) étant sélectionnée durant la phase de précharge et la sortie de la porte de détection d'états non-cohérents en phase d'évaluation (33) étant sélectionnée durant la phase d'évaluation, la sélection étant contrôlée par un signal de configuration (PRE/EVAL).

**10.** Circuit selon l'une quelconque des revendications précédentes **caractérisé en ce que** le circuit protégé par logique différentielle est un circuit de cryptographie.

**11.** Circuit selon l'une quelconque des revendications précédentes **caractérisé en ce que** le circuit est un circuit programmable de type FPGA.

**12.** Circuit selon l'une quelconque des revendications précédentes **caractérisé en ce que** le circuit est un circuit de type ASIC.

**Claims**

**1.** A circuit protected by differential logic that processes logic variables represented by pairs of components $(a_t, a_f)$ $(b_t, b_f)$, a first array of cells (T) realising logic functions on the first component of said pairs, a second array of dual cells (F) operating in complementary logic on the second component, **characterised in that** the components of the pairs are grouped by vectors $(A_t, A_f, B_t, B_f)$, said circuit comprising detection modules composed of two multipliers-accumulators (81, 82) realising multiplication-accumulation operations between the vectors $(A_t, B_t)$ grouping the first components of the pairs on the one hand and the vectors $(A_f, B_f)$ grouping the second components of the pairs on the other hand, which is performed after a low order bit of value 1 has been added to each of said vectors, the difference between the results of the two operations being calculated (83) then processed by a zero comparator (84), the output of which takes the zero value when a non-coherent state is detected in the pre-charge or evaluation phases.

**2.** The circuit according to claim 1, **characterised in that** the output of the zero comparator (84) of the detection modules is connected to a toggle (85) so as to generate a stable output ( $\overline{\text{FAUTE}}$ ), resulting from the detection of non-coherent states.

**3.** The circuit protected by differential logic preferably defined by any one of claims I to 2 that processes logic variables represented by pairs of components $(a_t, a_f)$ $(b_t, b_f)$, a first array of cells (T) realising logic functions on the first component of said pairs, a second array of dual cells (F) operating in complementary logic on the second component, the logic functions being completed by each pair of cells in a pre-charge phase that places the variables in a known state at the input of the cells, followed by an evaluation phase where a calculation is performed by the cells, said circuit comprising a plurality of modules (47) for detecting anomalies placed in different nodes of the circuit, an anomaly corresponding to a non-coherent statethat occurs during the pre-charge phase or during the evaluation phase, a detection module producing an output signal (FAUTE) indicating that an anomaly is detected at the node with which it is associated, **characterised in that** the circuit comprises means for combining said output signals in order to generate a global output signal (FAUTE_GLOBALE), the state of which indicates that a fault is detected by at least one detection module.

4. The circuit according to claim 3, **characterised in that** the outputs of the detection modules (FAUTE) are gathered by chaining, the results being centralised on at least one equipotential (56, 67) by means of "OR" gates (53, 54, 63, 64).

5. The circuit according to claim 4, **characterised in that** the output of each detection chain is connected to a toggle that is triggered by the clock signal (CLK) of the circuit and generates the global output signal (FAUTE_GLOBALE) using the value of 1 when at least one non-coherent state is detected by one of the detection modules (51, 52, 61, 62) of the chain.

6. The circuit according to claim 3, **characterised in that** at least one part of the detection modules of the circuit is organised into a tree (71, 72, 73, 74), the last detection module (74) generating a global signal that indicates if at least one non-coherent state has been detected at one of the nodes of the circuit monitored by said modules.

7. The circuit according to any one of claims 3 to 6, **characterised in that** a detection module comprises a logic gate that is used for detecting non-coherent states that occur during the pre-charge phase, said logic gate being an "OR" gate if the coherent state is (0.0), or an "AND" gate if the coherent state is (1.1).

8. The circuit according to any one of claims 3 to 7, **characterised in that** a detection module comprises an "XNOR" logic gate for detecting non-coherent states that occur during the evaluation phase.

9. The circuit according to any one of claims 3 to 8, **characterised in that** a detection module comprises a multiplexer (35) that allows the selection of the signal (FAUTE) resulting from the detection of non-coherent states, the output of the gate for detecting non-coherent states in the pre-charge phase (34) being selected during the pre-charge phase and the output of the gates for detecting non-coherent states in the evaluation phase (33) being selected during the evaluation phase, the selection being controlled by a configuration signal (PRE/EVAL).

10. The circuit according to any one of the preceding claims, **characterised in that** the circuit protected by differential logic is a cryptography circuit.

11. The circuit according to any one of the preceding claims, **characterised in that** the circuit is an FPGA type programmable circuit.

12. The circuit according to any one of the preceding claims, **characterised in that** the circuit is an ASIC type circuit.

**Patentansprüche**

1. Schaltung, die durch Differentiallogik geschützt ist, die Logikvariablen verarbeitet, die durch Paare von Komponenten $(a_t, a_f)$ $(b_t, b_f)$ repräsentiert werden, wobei eine erste Anordnung von Zellen (T) Logikfunktionen an der ersten Komponente der Paare realisiert, wobei eine zweite Anordnung von Dualzellen (F) in komplementärer Logik an der zweiten Komponente wirkt, **dadurch gekennzeichnet, dass** die Komponenten der Paare von Vektoren $(A_t, A_f, B_t, B_f)$ gruppiert werden, wobei die Schaltung Detektionsmodule umfasst, die aus zwei Vervielfachern-Akkumulatoren (81, 82) gebildet sind, die Multiplikations-/Akkumulationsoperationen zwischen den die ersten Komponenten der Paare gruppierenden Vektoren $(A_t B_t)$ einerseits und den die zweiten Komponenten der Paare gruppierenden Vektoren $(A_f, B_f)$ andererseits realisieren, was nach dem Addieren eines niederwertigen Bits mit Wert 1 zu jedem der Vektoren erfolgt, wobei die Differenz zwischen den Ergebnissen der beiden Operationen berechnet (83) und dann mit einem Null-Komparator (84) verarbeitet wird, dessen Ausgang den NullWert annimmt, wenn ein nicht kohärenter Zustand in den Vorlade- oder Beurteilungsphasen erfasst wird.

2. Schaltung nach Anspruch 1, **dadurch gekennzeichnet, dass** der Ausgang des Null-Komparators (84) der Detektionsmodule mit einem Flipflop (85) verbunden ist, um einen stabilen Ausgang ( $\overline{FAUTE}$ ) zu erzeugen, der von der Detektion von nicht kohärenten Zuständen resultiert.

3. Schaltung, die durch Differentiallogik geschützt ist, vorzugsweise wie in einem der Ansprüche 1 bis 2 definiert, die Logikvariablen verarbeitet, die durch Paare von Komponenten ($a_t$, $a_f$) ($b_t$, $b_f$) repräsentiert werden, wobei eine erste Anordnung von Zellen (T) Logikfunktionen an der ersten Komponente der Paare realisiert, wobei eine zweite Anordnung von Dualzellen (F) in komplementärer Logik an der zweiten Komponente wirkt, wobei die Logikfunktionen von jedem Paar Zellen in einer Vorladephase realisiert werden, die die Variablen in einen bekannten Zustand Eingang der Zellen setzt, gefolgt von einer Beurteilungsphase, in der eine Berechnung von den Zellen durchgeführt wird, wobei die Schaltung mehrere Module (47) zum Detektieren von in verschiedenen Knoten der Schaltung befindlichen Anomalien umfasst, wobei eine Anomalie einem nicht kohärenten Zustand entspricht, der während der Vorladephase oder während der Beurteilungsphase auftritt, wobei ein Detektionsmodul ein Ausgangssignal (FAUTE) erzeugt, das anzeigt, dass eine Anomalie an dem Knoten detektiert wird, mit dem es assoziiert ist, **dadurch gekennzeichnet, dass** die Schaltung Mittel zum Kombinieren der Ausgangssignale umfasst, um ein globales Ausgangssignal (FAUTE_GLOBALE) zu erzeugen, dessen Zustand anzeigt, dass eine Störung von wenigstens einem Detektionsmodul detektiert wurde.

4. Schaltung nach Anspruch 3, **dadurch gekennzeichnet, dass** die Ausgänge der Detektionsmodule (FAUTE) durch Verketten gesammelt werden, wobei die Ergebnisse auf wenigstens einem Äquipotential (56, 67) mittels "OR"-Gates (53, 54, 63, 64) zentralisiert werden.

5. Schaltung nach Anspruch 4, **dadurch gekennzeichnet, dass** der Ausgang jeder Detektionskette mit einem Flipflop verbunden ist, der vom Taktsignal (CLK) der Schaltung ausgelöst wird und das globale Ausgangssignal (FAUTE_GLOBALE) mit dem Wert 1 erzeugt, wenn wenigstens ein nicht kohärenter Zustand von einem der Detektionsmodule (51, 52, 61, 62) der Kette detektiert wird.

6. Schaltung nach Anspruch 3, **dadurch gekennzeichnet, dass** wenigstens ein Teil der Detektionsmodule der Schaltung zu einem Baum (71, 72, 73, 74) organisiert ist, wobei das letzte Detektionsmodul (74) ein globales Signal erzeugt, das anzeigt, wenn wenigstens ein nicht kohärenter Zustand an einem der Knoten der Schaltung, die von den Modulen überwacht werden, detektiert wurde.

7. Schaltung nach einem der Ansprüche 3 bis 6, **dadurch gekennzeichnet, dass** ein Detektionsmodul ein Logikgatter umfasst, das zum Detektieren von nicht kohärenten Zuständen verwendet wird, die während der Vorladephase auftreten, wobei dieses Logikgatter ein "ODER"-Gatter ist, wenn der kohärente Zustand (0.0) ist, oder ein "UND"-Gatter, wenn der kohärente Zustand (1.1) ist.

8. Schaltung nach einem der Ansprüche 3 bis 7, **dadurch gekennzeichnet, dass** ein Detektionsmodul ein "XNOR"-Logikgatter zum Detektieren von nicht kohärenten Zuständen umfasst, die während der Beurteilungsphase auftreten.

9. Schaltung nach einem der Ansprüche 3 bis 8, **dadurch gekennzeichnet, dass** ein Detektionsmodul einen Multiplexer (35) umfasst, der die Auswahl des von der Detektion von nicht kohärenten Zuständen resultierenden Signals (FAUTE) zulässt, wobei der Ausgang des Gatters zum Detektieren von nicht kohärenten Zuständen in der Vorladephase (34) während der Vorladephase gewählt wird und der Ausgang des Gatters zum Detektieren von nicht kohärenten Zuständen in der Beurteilungsphase (33) während der Beurteilungsphase gewählt wird, wobei die Auswahl durch ein Konfigurationssignal (PRE/EVAL) gesteuert wird.

10. Schaltung nach einem der vorherigen Ansprüche, **dadurch gekennzeichnet, dass** die durch Differentiallogik geschützte Schaltung eine Kryptografeschaltung ist.

11. Schaltung nach einem der vorherigen Ansprüche, **dadurch gekennzeichnet, dass** die Schaltung eine programmierbare Schaltung des FPGA-Typs ist.

12. Schaltung nach einem der vorherigen Ansprüche, **dadurch gekennzeichnet, dass** die Schaltung eine Schaltung des ASIC-Typs ist.

FIG.1

FIG.2

FIG.3

FIG.4

FIG.5

FIG.6

FIG.7

FIG.8

**EP 2 324 442 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DAVID NACCACHE.** Finding faults. *IEEE Security and Privacy,* 2005, vol. 3 (5), 61-65
- A Differential Fault Attack Technique against SPN Structures, with Application to the AES and KHAZAD. **GILLES PIRET ; JEAN-JACQUES QUISQUATER.** CHES. Springer, 2003, vol. 2779, 77-88
- Differential Behavioral Analysis. **BRUNO ROBISSON ; PASCAL MANET.** CHES. Springer, 2007, vol. 4727, 413-426